# EUROPÄISCHE PATENTSCHRIFT

(11) **EP 1 564 518 B1**
(45) Veröffentlichungstag und Bekanntmachung des Hinweises auf die Patenterteilung: **15.06.2011**
(21) Anmeldenummer: 04029313.6
(22) Anmeldetag: 10.12.2004
(51) Int. Cl.: F41H 7/04, B60K 6/48

(54) **Fahrzeug mit Schutz gegen die Wirkung einer Landmine**
Vehicle with land mine protection
Véhicule avec protection contre les mines terrestres

(30) Priorität: 11.02.2004 DE 102004024819; 28.05.2004 DE 102004026237
(43) Veröffentlichungstag der Anmeldung: 17.08.2005
(73) Patentinhaber: Rheinmetall Landsysteme GmbH, 24107 Kiel (DE)
(72) Erfinder: Hass, Frank, 24235 Wendtorf (DE); Runow, Eitel, 24620 Bönebüttel (DE)
(74) Vertreter: Dietrich, Barbara

(56) Entgegenhaltungen:
- DE-A1- 19 631 715
- DE-C1- 3 719 289
- DE-C1- 19 653 283
- FR-A- 2 276 552
- FR-A- 2 510 737
- US-A- 4 031 807
- US-A- 4 280 393
- US-A- 5 176 213

## Beschreibung

Die Erfindung bezieht sich auf ein Fahrzeug mit Schutz gegen die Wirkung einer Landmine, insbesondere ein gepanzertes Radfahrzeug, für den Schutz von Personen sowie auch des Fahrzeuggehäuses in gepanzerten Fahrzeugen insgesamt gegen die Wirkung der Explosion von Minen, die auf oder im Erdboden verlegt sind. Bekannt sind dabei zwei- und mehrachsige Fahrzeuge.

Diese Fahrzeuge haben am Chassis in der Regel einen glatten Unterboden und eine möglichst hohe Bodenfreiheit zwischen Unterboden und Erdboden, die von entsprechend ausgebildeten Rad- oder Kettenfahrwerken sichergestellt wird, damit sich das Fahrzeug auch im Gelände möglichst ungehindert fortbewegen kann. Die brisante Druckwirkung der unter dem Fahrzeug explodierenden Mine wirkt auf den relativ großflächigen Fahrzeug- oder Wannenboden, verformt und beschädigt diesen und kann erhebliche Schäden im Fahrzeug verursachen.

Aus der DE 31 19 786 A1 ist es zum Beispiel bekannt, zum Schutz gegen Minen auf der Unterseite des Fahrzeugs flächige Panzerungselemente anzubringen.

In der DE 196 31 715 C2 ist der Fahrzeugboden mit einem keil- bzw. V- förmig zum Boden ausgebildeten Deflektor ausgerüstet, wobei im freien Volumen zwischen Deflektor und der Unterseite des Fahrzeugs zur Abstützung von innen und Gegenwirkung gegen die Explosion ein füllbarer Gassack angeordnet sein kann.

In der DE 196 53 283 C1 wird eine Raumzelle als Besatzungsraum im Fahrzeuggehäuse separat elastisch aufgehängt, um damit auch Schockwirkungen, die von außen auf das Fahrzeug wirken, in Bezug auf die Personen im Fahrzeug zu beseitigen.

Aus der *nach veröffentlichten* DE 10259918 A1 ist eine Minenschutzvorrichtung insbesondere für Radfahrzeuge bekannt, bei der aus einer detektierten Schockwelle / Körperschallwelle bzw. Blastwelle ein Detektionssignal von einer Zünd- und Auswerteeinheit erfasst wird, die an ein pyrotechnisches Trennelement angeschlossen ist und zu einer Trennung der Radbaugruppe bzw. des Rades von der Fahrzeugstruktur führt. Die pyrotechnische Trennung der Tragstruktur kann durch eine Schneidladung oder durch geeignete Ausführungen der Trennstelle mittels pyrotechnischen Trennschrauben erfolgen.

In der WO 02/47958 A2 wird ein Fahrzeug beschrieben, welches an jedem der Räder einen hydraulisch betriebenen Motor aufweist. Wenn in ein Rad eine Schockwelle durch Detonation einer überfahrenen Mine eingeleitet wird, kommt es im Härtefall zum Abtrennen des Rades vom Fahrzeug. Eine Restmobilität wird dann dadurch erhalten, dass die anderen Räder jeweils über einen eigenen Antrieb verfügen.

Aus der DE 102 33 274 A1 ist ein aus Einzelsegmenten aufgebautes gepanzertes Radfahrzeug bekannt, welches aus zwei Segmenten, einem Fahrsegment und einem Missionssegment, besteht und elektrische Antriebsmotoren in den Radnarben beider Segmente aufweist. Im hinteren Missionssegment sind Batterien zur Versorgung der Antriebsmotoren vorgesehen.

Die US 4, 031. 807 A beschreibt ein geländefähiges Fahrzeug, dass aus einem mittleren Chassis besteht, an dessen beiden Enden je ein sich quer und längs zur Fahrtrichtung gerichtete Achse schwenkbares Fahrgestell angeordnet sind. Zwischen diesem Chassis und den Fahrgestellen sind Steuermittel zur Steuerung der Neigung der Fahrgestelle gegenüber dem Chassis um die quer zur Fahrtrichtung gerichtete Achse vorgesehen. Im vorderen als auch im hinteren Fahrgestell ist jeweils ein Gruppenantrieb eingebunden. Ein besonderer Minenschutz für die Besatzung ist nicht angedacht.

Aufgabe der Erfindung ist es, ein weiteres Schutzsystem auszubilden, dass eine Restmobilität für ein Fahrzeug erhalten bleibt, wenn dieses durch eine überfahrene Mine oder dergleichen einen Defekt erfährt.

Diese Aufgabe wird erfindungsgemäß durch die Merkmale des Anspruchs 1 gelöst. Weitere bevorzugte Ausgestaltungen sind in den Unteransprüchen enthalten.

Der Erfindung liegt die Idee zugrunde, front- und heckseitig jeweils einen elektrischen Antriebsmotor oder einen elektrischen und einen normalüblichen Antriebsmotor unterzubringen. Beim Fahrzeug mit normalüblichem Antrieb ist vorgesehen, dass mittels eines Verbrennungsmotors mechanisch die Räder einer ersten Fahrzeugachse angetrieben werden und ein separater elektrischer Antrieb eine zweite Fahrzeugachse antreiben kann. Dabei kann der Elektromotor seinen Strom aus einem Generator, der am Verbrennungsmotor angebaut ist, beziehen oder aus einem separaten elektrischen Energieerzeuger oder aus Batterien, die vorher aufgeladen wurden und entsprechend Strom für eine gewisse Beweglichkeit speichern können. Auch andere Speicher wie hochkapazitive Kondensatoren können hierbei zum Einsatz kommen. Derartige hybride Antriebe sind beispielsweise aus der DE 197 18 709 A1 bekannt. Es ist jedoch vorgesehen, dass das eine Antriebssystem das andere ersetzt, wenn dieses andere ausgefallen ist, um eine Restmobilität insbesondere in Gefahrensituationen schaffen zu können, um sich dadurch selbständig aus dem direkten Gefahrenbereich einer Minensperre entfernen zu können. Bei Nutzung zweier elektrischer Antriebe ist einer im Frontbereich des Fahrzeugs neben der Vorderachse und der Lenkung eingebunden. Im Heckbereich ist dann neben der Hinterachse gleichfalls ein Antriebsmotor vorhanden. Dies hat den Vorteil, dass ein Frontmotor und ein Heckmotor gleichzeitig betrieben werden können, so dass ein redundanter Antrieb geschaffen und auch eine Restmobilität sichergestellt werden kann.

Für eine bessere Schutzwirkung ist das Fahrzeug in mehrere Bausteine getrennt bzw. unterteilt, die miteinander und voneinander loslösbar verbunden sind. Dieses Fahrzeug setzt sich dabei aus einem mittlerer Baustein, dem sogenannten Hauptbaustein, sowie einem Front- und Heckbaustein bzw. -teil zusammen. Heck- und Frontteil können an den mittleren Baustein angeflanscht oder mittels Sprengbolzen lösbar befestigt sein. Die Sprengbolzen werden mittels einer eingebauten Ladung gezündet und können so abgesprengt werden. Die Verbindung der Bausteine mit Sollbruchstellen aufweisenden Bolzen ist ebenfalls möglich. Die Radachsen werden vorzugsweise zudem so plaziert, dass sie nicht unter dem Mannschaftsraum liegen.

Der eigentliche Mannschaftsraum wird in Weiterbildung als Kabine oder Schutzzelle in das Fahrzeuggehäuse, dem Hauptbaustein, eingehängt und schwingungsmäßig entkoppelt. Die Tragstruktur wir plastisch deformierbar gehalten und der V-förmige Unterboden wird ohne Durchbrüche wie zum Beispiel Türen aufgebaut. Es erfolgt also eine elastische Aufhängung im Dachbereich des Hauptbausteins, der aus plastisch verformbaren, Energie aufnehmenden, dünnwandigen Hohlprofilen besteht.

Ein innerhalb des Hauptbausteins zwischen dem V-förmigen Boden der Tragstruktur und der (unten) abgeflachten Kabine entstehender Raum kann dazu dienen, die Antriebswelle und / oder Kabel aufzunehmen.

Die Bausteine sind so konstruiert, dass Minensprengungen möglichst geringe schädliche Auswirkungen haben.

Des Weiteren ist durch das einfache Anbringen der Kabine ein einfaches Aushängen der einen und das einfache Einhängen einer anderen Kabine möglich. Dies erleichtert eine Umrüstung der Hauptkabine in eine neue Fahrzeug-Variante.

Vorgeschlagen wird also ein militärisches Radfahrzeug mit hohem Minenschutz, bei welchem die jede der vorhandenen Radachsen mit Antrieben versehen ist und eine vorzugsweise Dreiteilung im Fahrzeugaufbau in einen Frontbaustein, einen Hauptbaustein und einen Heckbaustein eine Restmobilität gewährt, wenn der Frontbaustein oder der Heckbaustein bzw. Teile davon nach dem Überfahren einer Mine vom Hauptbaustein abgetrennt werden.

Weitere Vorteile ergeben sich aus den Unteransprüchen.

Ausführungsbeispiele der Erfindung sind in den Zeichnungen schematisch dargestellt und werden im folgenden näher beschrieben. Es zeigen:
- Figur 1:: Perspektivansicht eines Beispielfahrzeugs,
- Figur 2:: Seitenansicht eines Fahrzeugs,
- Figur 3:: Darstellung des Fahrzeugs in Seitenansicht nach dem Überfahren einer Mine,
- Figur 4:: Querschnitt einer Sicherheitszelle für die Besatzung,
- Figur 5:: Seitenansicht der aufgehängten Sicherheitszelle.

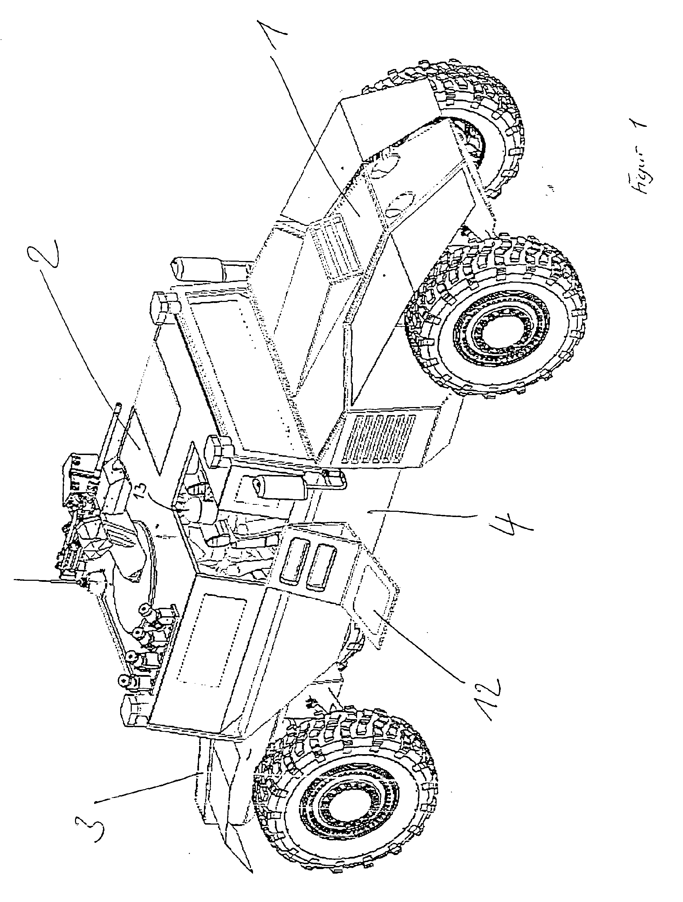

In Figur 1 wird ein erfindungsgemäßes zweiachsiges Beispielfahrzeug 4 mit mehreren Bausteinen, wie Frontbaustein 1, Hauptbaustein 2 und Heckbaustein 3, gezeigt. Mit 12 gekennzeichnet ist ein Ausstieg für eine mit 13 gekennzeichnete Besatzung.

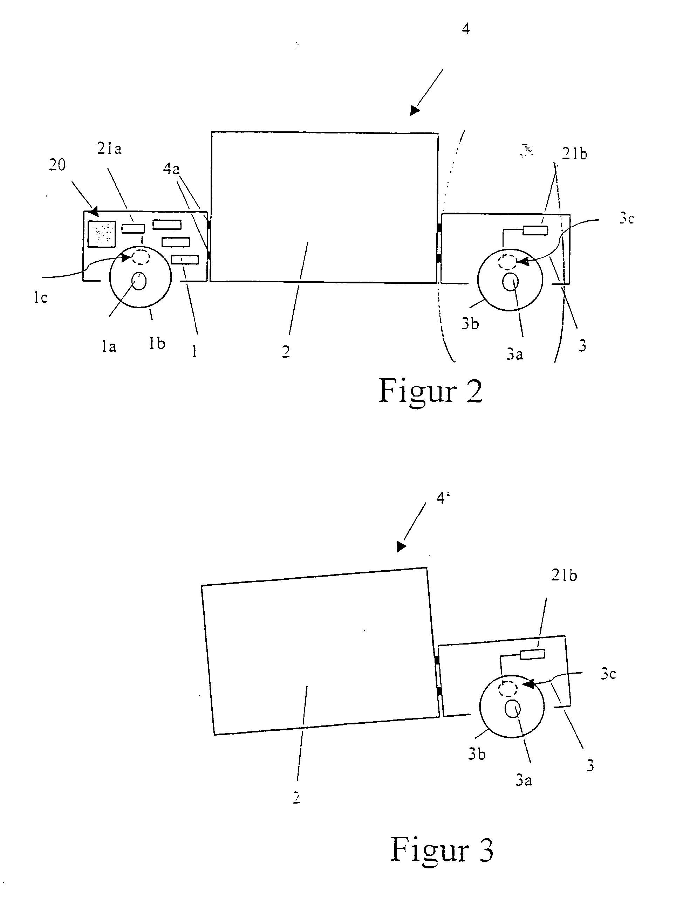

Das in Figur 2 von der Seite gezeigte Fahrzeug 4 besitzt im Frontbaustein 1, hier auch als Motorbaustein bezeichnet, eine Radachse 1a mit einem rechten und einem linken vorderen Rad 1b. Im Hauptbaustein 2, hier auch als Mannschaftsraumbaustein bezeichnet, befindet sich eine Radachse 3a mit einem rechten und linken hinteren Rad 3b. Die Radachsen 1a, 3a sind hierbei vorzugsweise nicht wie üblich unter dem Mannschaftsraumbaustein 2 angeordnet. Motor- und Heckbaustein 1, 3 können am Mannschaftraumbaustein 2 angeflanscht bzw. lösbar mittels skizzenhaft angedeuteten Bolzen / Sprengbolzen 4a mit diesem verbunden sein. Der Frontbaustein 1 weist neben einer nicht näher dargestellten Lenkung einen Antriebsmotor 1c sowie einen Verbrennungsmotor 20 und einen daran befestigten, beispielsweise angeflanschten Stromerzeuger 21, hier einen Generator auf. Auch im Heckbaustein 3 ist ebenfalls ein Antriebsmotor 3c vorgesehen. Der Heckbaustein 3 weist zusätzlich eine Batterie 22 auf, die mit dem Antriebsmotor 3c verbunden ist. Die Stromzuführung Generator 22 zum Antriebsmotor 1c und Batterie 23 zum Antriebsmotor 3c erfolgt herkömmlich über Stromleitungen 23.

In allen hier beschriebenen Ausführungen des Fahrzeugs 4 wird bevorzugt um die Räder 1b, 3b senkrecht nach oben ein Freiraum eingehalten.

In Figur 3 ist ein Treffer beispielsweise durch ein Überfahren einer nicht näher dargestellten Mine am Fahrzeug 4 symbolisch aufgezeigt. In dieser Situation ist das Frontteil 1 vom Hauptbaustein 2 abgesprengt worden. Der verbleibende Rest des Fahrzeugs 4' hat hier jedoch einen eigenen Antrieb 3c, der dem Fahrzeug 4' eine Restmobilität gewährleistet.

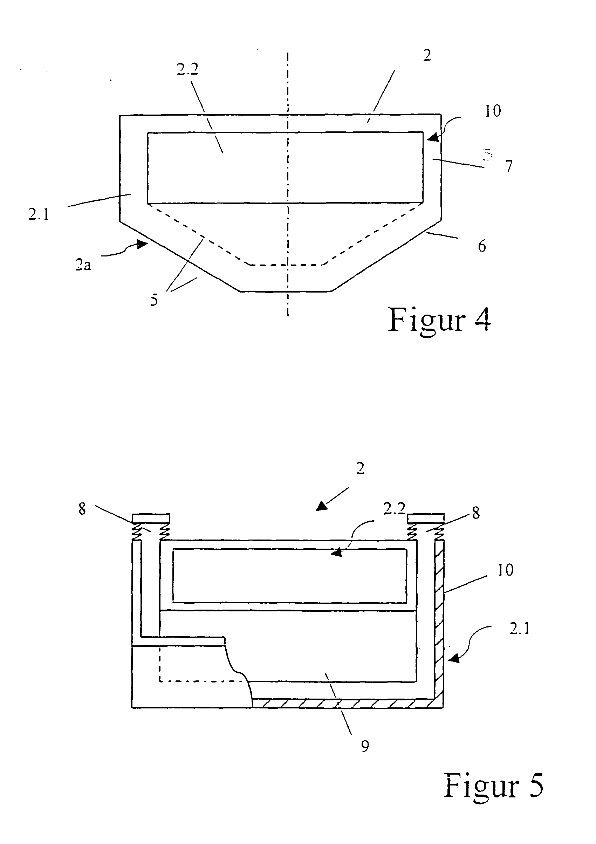

In Figur 4 ist der Hauptbaustein 2 aus Figur 3 (alternativ Figur 1) im Querschnitt mit einem abgeschrägten Boden 6, welcher doppelwandig 5 ausgeführt ist, und einem Hohlprofil 7 dargestellt.

Der Hauptbaustein 2 besteht aus einem äußeren 2.1 und einem inneren Bereich 2.2. Der äußere Bereich 2.1 ist als Wanne 2.a und nach unten hin V-förmig ausgebildet. Der innere Bereich 2.2, der eigentliche Mannschaftsraum, wird durch eine Kabine oder Sicherheitszelle 9, 11 voll umschlossen und ist in den äußeren Teil, dem Gehäuseteil 10, eingehängt und an der oberen Kante des äußeren Bereichs 2.1 befestigt.

In Figur 5 ist das Prinzip der aufgehängten Kabine 9 gezeigt, wobei diese als Sicherheitszelle 9 mittels elastischen Aufhängungen 8 in dem Gehäuseteil 10 eingehängt ist. Das Gehäuseteil 10 weist eine plastisch deformierbare Tragstruktur auf. Das Material dieser Kabine 9 ist vorzugsweise Aluminium, um Sekundärsplitter aufzufangen.

Bei einer Minenexplosion trifft eine nicht näher dargestellte Mine beispielsweise ein Rad bzw. beide Räder 1b, welche sich lösen und nach oben wegfliegen können. In solchen Fällen ist vorgesehen, dass der ganze Frontbaustein 1 abreißen bzw. abgesprengt wird. Dabei wird vorzugsweise die gesamte Achse 1a und der Antrieb 20, 1c von Fahrzeug 4 getrennt, ohne von unten in den Hauptbaustein 2 zu schlagen, da die Bausteine 1, 2, 3 eine vertikale Trennlinie haben. Der Restimpuls, der danach in den mittleren Hauptbaustein 2 fließt, wird durch die doppelwandige Bauweise im unteren Bereich in Verformungsenergie umgewandelt. Danach trifft der Impuls auf dünnwandige Träger im oberen Bereich, die sich zusammenstauchen. Der dann noch vorhandene Restimpuls trifft auf die elastischen Lager bzw. Aufhängung 8 am Dach der Kabine 9, 11. Dort ist der Impuls schon so lang und flach, dass mechanische Federn o.ä. eingesetzt werden können. Der Restimpuls, der über diese Federn in das Dach der Kabine 9, 11 fließt, ist weit genug gedämpft, um die Besatzung nicht mehr zu verletzen. Mittels des verbleibenden Antriebs 3c (oder, wenn der Heckbaustein 3 abgetrennt wurde, mittels 1c bzw. in Kombination mit Verbrennungsmotor 20) kann sich die Mannschaft des Fahrzeugs 4 bzw. den Resten des Fahrzeugs 4' eigenständig aus der Gefahrenzone in Sicherheit bringen.

Es versteht sich, dass auch Front- und /oder Heckbaustein 1, 3 abgeschrägte Böden besitzen können, die dem Boden 6 des Hauptbausteins 2 entsprechen.

Die vorgehende Beschreibung bezieht sich auf ein zweiachsiges Fahrzeug 4. Die Lösung läßt sich auch an mehrachsigen Fahrzeugen verwirklichen, die in mehreren Bausteinen unterteilt voneinander lösbar sind wie beschrieben. Diese Unterteilung kann dann auch innerhalb des Frontbauteils 1 oder des Heckbauteils 3 erfolgen. Beispielsweise kann vorgesehen sein, dass jede Radachse mit einem Antriebsmotor versehen ist und ein eigenes abtrennbares Segment darstellt.

### Bezugszeichenliste

- 1: Front- bzw. Motorbaustein
- 1a: Radachse
- 1b: Rad
- 2: Hauptbaustein, Mannschaftsraum- Baustein
- 2.1: äußerer Bereich
- 2.2: innerer Bereich
- 2.a: Wanne
- 3: Heckbaustein
- 3a: Radachse
- 3b: Rad
- 4: Fahrzeug
- 4.a: Bolzen / Sprengbolzen
- 5: doppelwandiger Boden
- 6: abgeschrägter Boden
- 7: Hohlprofil
- 8: elastische Aufhängung
- 9: Sicherheitszelle
- 10: Gehäuseteil
- 11: Sicherheitszelle

- 20: Verbrennungsmotor
- 21: Generator
- 22: Batterie
- 23: Stromzuführung

## Patentansprüche

1. Fahrzeug (4) mit Schutz gegen die Wirkung einer Landmine, insbesondere gepanzertes Radfahrzeug, bestehend aus mehreren Bausteinen (1, 2, 3), wobei
- ein Frontbaustein (1) mit wenigstens einer Radachse (1a) und ein Heckbaustein (3) mit wenigstens einer Radachse (3a) an einem Hauptbaustein (2) vorn und hinten an diesem befestigt sind, **dadurch gekennzeichnet dass**,
- der Hauptbaustein (2) einen V-förmigen Unterboden (6) besitzt,
- ein elektrischer Antriebsmotor (1c) und ein Verbrennungsmotor (20) im Frontbaustein (1) und ein elektrischer Antriebsmotor (3c) im Heckbaustein (1, 3) oder
- ein elektrischer Antriebsmotor (1c) im Frontbaustein (1) und ein elektrischer Antrieb (3c) und ein Verbrennungsmotor (20) im Heckbaustein (3) vorhanden sind,
- der Front-(1) und der Heckbaustein (3) über Mittel (4a) lösbar am Hauptbaustein (2) befestigt sind, sodass,
- wenn das Fahrzeug die Landmine überfährt, bei einer Minenexplosion der Front- oder Heckbaustein (1, 3) vom Hauptbaustein (2) getrennt wird, und
- die jeweils wenigstens eine Radachse (1a, 3a) mittels des verbliebenen Antriebes (1c, 3c, 20) im Front- oder im Heckbaustein (1, 3) angetrieben und der Front- oder Heckbaustein (1, 3) mit dem Hauptbaustein (2) eigenständig aus der Gefahrenzone in Sicherheit gebracht wird.

2. Fahrzeug nach Anspruch 1, **dadurch gekennzeichnet, dass** die Mittel (4a) Bolzen, welche Sollbruchstellen aufweisen, und / oder Sprengbolzen, welche mittels einer eingebauten Ladung gezündet und abgesprengt werden können, sind.

3. Fahrzeug nach einem der Ansprüche 1 oder 2, **dadurch gekennzeichnet, dass** ein Freiraum senkrecht nach oben über den Rädern (1b, 3b) und den Radachsen (1a, 3a) eingehalten ist und die Radachsen (1a, 3a) des Fahrzeugs (4) so platziert sind, dass sie nicht unter dem Hauptbaustein (2) angebracht sind.

4. Fahrzeug nach einem der vorgenannten Ansprüche 1 bis 3, **dadurch gekennzeichnet, dass** das Gehäuse des Hauptbausteins (2) als Wannengehäuse (2a) doppelwandig ausgeführt ist und aus dünnem Stahlblech besteht.

5. Fahrzeug nach Anspruch 4, **dadurch gekennzeichnet, dass** das Wannengehäuse (2a) aus Hohlprofilen (7) gebildet wird.

6. Fahrzeug nach einem der vorgenannten Ansprüche 1 bis 5, **dadurch gekennzeichnet, dass** der Hauptbaustein eine Kabine und / oder Schutzzelle (9, 11) enthält, welche mittels elastischer Aufhängungen (8) im Gehäuseteil (10) eingehängt und schwingungsmäßig entkoppelt wird.

7. Fahrzeug nach Anspruch 6, **dadurch gekennzeichnet, dass** das Gehäuseteil (10) eine plastisch deformierbare Tragstruktur aufweist.

8. Fahrzeug nach einem der vorgenannten Ansprüche 1 bis 7, **dadurch gekennzeichnet, dass** die Kabine (9, 11) aus dickwandigem, zähen Material, wie Aluminium besteht.

9. Fahrzeug nach einem der vorgenannten Ansprüche 1 bis 8, **dadurch gekennzeichnet, dass** das Fahrzeug durch einfaches Aushängen der Kabine (9, 11) und Einhängen einer anderen Kabine (9, 11) in eine neue Fahrzeug-Version umgerüstet werden kann.

10. Fahrzeug nach einem der Ansprüche 1 bis 9, **dadurch gekennzeichnet, dass** der elektrische Antriebsmotor (1c) im Frontbaustein (1) über einen Stromerzeuger (21) mit dem Verbrennungsmotor (20) und der elektrische Antrieb (3c) im Heckbaustein (3) mit einer Batterie (22) oder dergleichen mittels Stromleitungen (23) verbunden ist.

11. Fahrzeug nach einem der Ansprüche 1 bis 10, **dadurch gekennzeichnet, dass** der elektrische Antriebsmotor (3c) im Heckbaustein (3) über einen Stromerzeuger (21) mit dem Verbrennungsmotor (20) und der elektrische Antrieb (1c) im Frontbaustein (1) mit einer Batterie (22) oder dergleichen mittels Stromleitungen (23) verbunden ist.

12. Fahrzeug nach einem der Ansprüche 1 bis 11, **dadurch gekennzeichnet, dass** ein mehrachsiges Fahrzeug in mehrere Bausteine unterteilt voneinander lösbar ist, wobei die Unterteilung auch innerhalb des Frontbausteins (1) oder des Heckbausteins (3) erfolgen kann, jede Radachse mit einem Antriebsmotor versehen ist und ein eigenes abtrennbares Segment darstellt.

## Claims

1. Vehicle (4) having protection against the effect of a land mine, in particular an armoured wheeled vehicle, consisting of a plurality of modules (1, 2, 3) wherein
- a front module (1) having at least one wheel axle (1a) and a rear module (3) having at least one wheel axle (3a) are mounted on a main module (2) at the front and rear thereon, **characterized in that**
- the main module (2) has a V-shaped lower floor (6),
- an electric drive motor (1c) and an internal combustion engine (20) are provided in the front module (1) and an electric drive motor (3c) is provided in the rear module (1, 3), or
- an electric drive motor (1c) is provided in the front module (1), and an electrical drive (3c) and an internal combustion engine (20) are provided in the rear module (3),
- the front module (1) and the rear module (3) are detachably mounted on the main module (2) via means (4a), such that
- when the vehicle drives over the land mine, the front module (1) or the rear module (3) is separated from the main module (2) in the event of a mine explosion, and
- the respective at least one wheel axle (la, 3a) is driven by means of the remaining drive (1c, 3c, 20) in the front module (1) or in the rear module (3), and the front module (1) or the rear module (3), together with the main module (2), is automatically made safe from the danger zone.

2. Vehicle according to Claim 1, **characterized in that** the means (4a) are bolts which have weak points, and/or explosive bolts which can be fired and blown apart by means of a built-in charge.

3. Vehicle according to one of Claims 1 or 2, **characterized in that** a free space is kept vertically at the top above the wheels (1b, 3b) and the wheel axles (la, 3a), and the wheel axles (la, 3a) of the vehicle (4) are placed such that they are not fitted under the main module (2).

4. Vehicle according to one of the abovementioned Claims 1 to 3, **characterized in that** the housing of the main module (2) is in the form of a double-walled hull housing (2a) and is composed of thin sheet steel.

5. Vehicle according to Claim 4, **characterized in that** the hull housing (2a) is formed from hollow profiles (7).

6. Vehicle according to one of the abovementioned Claims 1 to 5, **characterized in that** the main module contains a cab and/or a protective cell (9, 11), which is suspended in the housing part (10) by means of elastic suspensions (8), and is decoupled in terms of oscillation.

7. Vehicle according to Claim 6, **characterized in that** the housing part (10) has a plastically deformable load-bearing structure.

8. Vehicle according to one of the abovementioned Claims 1 to 7, **characterized in that** the cab (9, 11) is composed of thick-walled, tough material, such as aluminium.

9. Vehicle according to one of the abovementioned Claims 1 to 8, **characterized in that** the vehicle can be converted to a new vehicle version simply by removing the cab (9, 11) and attaching a different cab (9, 11).

10. Vehicle according to one of Claims 1 to 9, **characterized in that** the electric drive motor (1c) in the front module (1) is connected via an electricity generator (21) to the internal combustion engine (20), and the electrical drive (3c) in the rear module (3) is connected to a battery (22) or the like by means of electrical power lines (23).

11. Vehicle according to one of Claims 1 to 10, **characterized in that** the electric drive motor (3c) in the rear module (3) is connected via an electricity generator (21) to the internal combustion engine (20), and the electrical drive (1c) in the front module (1) is connected to a battery (22) or the like by means of electrical power lines (23).

12. Vehicle according to one of Claims 1 to 11, **characterized in that** a multi-axle vehicle can be separated into a plurality of modules, subdivided from one another, wherein the subdivision can also be carried out within the front module (1) or the rear module (3), each wheel axle is provided with a drive motor, and represents an autonomous segment which can be separated.

## Revendications

1. Véhicule (4) avec protection contre l'action d'une mine terrestre, notamment véhicule blindé sur roues, constitué de plusieurs modules (1, 2, 3), dans lequel
- un module avant (1) avec au moins un essieu de roue (1a) et un module arrière (3) avec au moins un essieu de roue (3a) sont fixés sur un module principal (2) à l'avant et à l'arrière de celui-ci,
**caractérisé en ce que**
- le module principal (2) possède un dessous de caisse (6) en forme de V,
- un moteur d'entraînement électrique (1c) et un moteur à combustion interne (20) sont prévus dans le module avant (1) et un moteur d'entraînement électrique (3c) est prévu dans le module arrière (1, 3)
ou
- un moteur d'entraînement électrique (1c) est prévu dans le module avant (1) et un entraînement électrique (3c) et un moteur à combustion interne (20) sont prévus dans le module arrière (3),
- les modules avant (1) et arrière (3) sont fixés par le biais de moyens (4a) de manière amovible sur le module principal (2), de telle sorte
- que lorsque le véhicule roule par-dessus une mine terrestre, si la mine explose, le module avant ou le module arrière (1, 3) se sépare du module principal (2), et
- que l'au moins un essieu de roue respectif (la, 3a) soit entraîné au moyen de l'entraînement restant (1c, 3c, 20) dans le module avant ou le module arrière (1, 3) et que le module avant ou le module arrière (1, 3) avec le module principal (2) soit amené en sécurité de manière autonome hors de la zone de danger.

2. Véhicule selon la revendication 1, **caractérisé en ce que** les moyens (4a) sont des boulons qui présentent des zones de rupture, et/ou des boulons explosifs qui peuvent être allumés et explosés au moyen d'une charge incorporée.

3. Véhicule selon l'une quelconque des revendications 1 ou 2, **caractérisé en ce qu'**un espace libre est conservé verticalement vers le haut au-dessus des roues (1b, 3b) et des essieux de roues (la, 3a) et les essieux de roues (la, 3a) du véhicule (4) sont placés de telle sorte qu'ils ne soient pas montés sous le module principal (2).

4. Véhicule selon l'une quelconque des revendications précédentes 1 à 3, **caractérisé en ce que** le boîtier du module principal (2) est réalisé sous forme de boîtier cuvette (2a) à double paroi et se compose de tôle d'acier mince.

5. Véhicule selon la revendication 4, **caractérisé en ce que** le boîtier cuvette (2a) est formé de profilés creux (7).

6. Véhicule selon l'une quelconque des revendications précédentes 1 à 5, **caractérisé en ce que** le module principal contient une cabine et/ou une cellule protectrice (9, 11), qui est accrochée au moyen de suspensions élastiques (8) dans la partie de boîtier (10) et qui est désaccouplée vis-à-vis des vibrations.

7. Véhicule selon la revendication 6, **caractérisé en ce que** la partie de boîtier (10) présente une structure portante déformable plastiquement.

8. Véhicule selon l'une quelconque des revendications précédentes 1 à 7, **caractérisé en ce que** la cabine (9, 11) se compose d'un matériau rigide à parois épaisses, comme de l'aluminium.

9. Véhicule selon l'une quelconque des revendications précédentes 1 à 8, **caractérisé en ce que** le véhicule peut être modifié en une nouvelle version de véhicule par simple décrochage de la cabine (9, 11) et accrochage d'une autre cabine (9, 11).

10. Véhicule selon l'une quelconque des revendications 1 à 9, **caractérisé en ce que** le moteur d'entraînement électrique (1c) dans le module avant (1) est connecté par le biais d'un générateur de courant (21) au moteur à combustion interne (20) et l'entraînement électrique (3c) dans le module arrière (3) est connecté à une batterie (22) ou similaire au moyen de conduites électriques (23).

11. Véhicule selon l'une quelconque des revendications 1 à 10, **caractérisé en ce que** le moteur d'entraînement électrique (3c) dans le module arrière (3) est connecté par le biais d'un générateur de courant (21) au moteur à combustion interne (20) et l'entraînement électrique (1c) dans le module avant (1) est connecté à une batterie (22) ou similaire au moyen de conduites électriques (23).

12. Véhicule selon l'une quelconque des revendications 1 à 11, **caractérisé en ce qu'**un véhicule à plusieurs essieux peut être démonté en plusieurs modules séparés les uns des autres, la séparation pouvant aussi s'effectuer à l'intérieur du module avant (1) ou du module arrière (3), chaque essieu de roue étant pourvu d'un moteur d'entraînement et constituant un segment propre pouvant être séparé.
